# EUROPÄISCHE PATENTSCHRIFT

(11) **EP 4 211 365 B1**
(45) Veröffentlichungstag und Bekanntmachung des Hinweises auf die Patenterteilung: **18.09.2024**
(21) Anmeldenummer: 21769088.2
(22) Anmeldetag: 23.08.2021
(51) Int. Cl.: F16G 11/12, B60P 7/08, F16B 7/06, F16G 3/00

(54) **SPANNVORRICHTUNG**
TENSIONING DEVICE
DISPOSITIF DE MISE EN TENSION

(30) Priorität: 10.09.2020 DE 202020105227 U
(43) Veröffentlichungstag der Anmeldung: 19.07.2023
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Andrejewski - Honke Patent- und Rechtsanwälte Partnerschaft mbB
(86) Internationale Anmeldenummer: PCT/EP2021/073225
(87) Internationale Veröffentlichungsnummer: WO 2022/053293

(56) Entgegenhaltungen:
- EP-A2- 1 588 975
- EP-A2- 2 378 158
- DE-C- 720 193
- DE-U1- 20 106 090
- GB-A- 846 096
- US-B2- 9 103 405

## Beschreibung

Die Erfindung betrifft eine Spannvorrichtung zum Spannen von Ketten, Bändern, Seilen oder dergleichen Spannmittel, mit wenigstens einer rohrförmigen Spannmutter, und mit zumindest einem in die Spannmutter eintauchenden und mit ihr wechselwirkenden Gewindebolzen, wobei der Gewindebolzen mit wenigstens einer endseitigen Ausdrehsicherung ausgerüstet ist, und wobei der Gewindebolzen endseitig mit einem Gewindefreibereich und einem daran anschließenden Anschlag als Ausdrehsichtung ausgerüstet ist.

Solche Spannvorrichtungen werden typischerweise im Bereich der Hebe- und Transporttechnik, also allgemein der Logistik eingesetzt. Bei dem auf diese Weise zu spannenden Spannmittel handelt es sich nicht einschränkend um Ketten, Bänder, Seile oder Ähnliches. Mit ihrer Hilfe lässt sich beispielsweise Ladegut auf Transportflächen von Transportfahrzeugen sichern. Als denkbare Transportfahrzeuge kommen LKW-Auflieger, Anhänger, Zuganhänger etc. aber auch Ladeplattformen für Schiffe, Container usw. zum Einsatz.

Aufgrund der geschilderten Einsatzgebiete müssen oftmals hohe Spannkräfte mit Hilfe der Spannvorrichtung auf das Spannmittel ausgeübt werden. Dazu ist die Spannmutter regelmäßig mit einer Ratsche ausgerüstet, wie dies in der DE 20 2020 103 769 U1 der Anmelderin detailliert beschrieben wird. Außerdem kann die Spannvorrichtung einseitig an das Spannmittel angeschlossen sein und mit dem verfahrbaren Ende am Gewindebolzen in eine Öse auf der Ladefläche oder einen anderen Befestigungspunkt eingreifen. Es ist aber auch möglich, dass die Spannvorrichtung beidseitig an ein Spannmittel angeschlossen wird, um die nötige Zurrkraft zur Sicherung der Ladung auf der Transportfläche im Beispielfall zur Verfügung zu stellen.

Eine Spannvorrichtung wird beispielsweise in der US 4,130,269 beschrieben. Hier sind zwei beidseitig in die mittige und rohrförmige Spannmutter eintauchende Gewindebolzen realisiert. Die beiden Gewindebolzen verfügen endseitig über eingedrehte Schrauben, die beim Erreichen einer maximalen Ausdrehlänge des Gewindebolzens gegen einen Anschlag fahren. Dadurch wird die gewünschte Ausdrehsicherung zur Verfügung gestellt.

Allerdings besteht bei derartigen Spannvorrichtungen das Problem, dass die fragliche Schraube bei Aufbringen großer Spannkräfte abgeschert oder beschädigt wird. Dadurch kann die Ausdrehsicherung nicht (mehr) ihrer gewünschten Funktion nachkommen. Hinzu kommt, dass hierdurch die Spannvorrichtung oftmals irreparabel geschädigt wird bzw. eine kostspielige Reparatur erforderlich ist.

Solche Szenarien werden zunehmend in der Praxis beobachtet, weil einerseits die aufgebrachten Spannkräfte steigen und andererseits der Spannweg wächst. Das lässt sich unter anderem darauf zurückführen, dass mit Hilfe der beschriebenen Spannvorrichtung nicht nur Stahlketten mit geschmiedeten Kettengliedern gespannt werden, sondern zunehmend sogenannte textile Ketten mit der erforderlichen Zurrkraft ausgerüstet werden. Solche textile Ketten werden beispielsweise in der DE 20 2018 105 723 U1 der Anmelderin beschrieben. Sie zeichnen sich durch eine hohe Festigkeit bei zugleich geringem Gewicht aus, neigen jedoch zu ausgeprägter Torsion, bevor die erforderlichen Spannkräfte aufgebracht werden können. Als Folge hiervon werden große Spannlängen für den Gewindebolzen gefordert, die dazu führen (können), dass der betreffende Gewindebolzen gegen die Ausdrehsicherung fährt.

Vor vergleichbaren Problemen steht die Spannvorrichtung nach der ebenfalls gattungsbildenden WO 2018/073098 A1. Tatsächlich sind an dieser Stelle Endanschläge an den Enden von Gewindestangen vorgesehen. Hierbei handelt es sich um einen Sprengring bzw. einen Abschlussdeckel. Aufgrund des scheiben- bzw. ringförmigen Charakters dieser Endanschläge wird zwar eine bessere Krafteinleitung im Vergleich zu den Schrauben nach der US 4,130,269 beobachtet. Allerdings sind auch in diesem Fall Beschädigungen möglich. Außerdem gibt der bisherige Stand der Technik keinerlei Rückmeldung an den Bediener, dass der Endanschlag erreicht wird, um solche Beschädigungen zu verhindern.

Die zuvor beschriebenen Probleme sind durch den nächstkommenden Stand der Technik gemäß der EP 1 588 975 A2 nicht maßgeblich beeinflusst worden. Tatsächlich geht es an dieser Stelle um ein Abhängeelement, welches mit einem Mittelelement bzw. einer Spannmutter ausgerüstet ist. Das Mittelelement bzw. die Spannmutter verfügt im Bereich jeweiliger Stirnflächen über eine Gewindehülse. Auf diese Weise können beidseitig gegenüberliegende Befestigungselemente in das Mittelelement bzw. die Spannmutter eingreifen. Dabei ist eines dieser Befestigungselemente mit einer aufgesetzten Scheibe als Anschlag und Ausdrehsicherung ausgerüstet. Zu diesem Zweck ist die Scheibe beispielsweise aufgeklebt oder aufgenietet, um sicherzustellen, dass das zugehörige Befestigungselement nicht vollständig aus dem Gewinde im Innern der Spannmutter bzw. des Mittelelementes herausgedreht werden kann.

Der Erfindung liegt das technische Problem zugrunde, eine derartige Spannvorrichtung zum Spannen von Ketten, Bändern, Seilen oder dergleichen so weiterzuentwickeln, dass Beschädigungen möglichst vermieden werden und ein Bediener über das Erreichen des Endanschlages informiert wird.

Zur Lösung dieser technischen Problemstellung ist eine gattungsgemäße Spannvorrichtung im Rahmen der Erfindung dadurch gekennzeichnet, dass der Anschlag zweiteilig mit einem Festanschlag und einem Losanschlag sowie dazwischen angeordneter Feder ausgebildet ist.

Die Erfindung arbeitet also nach wie vor und unverändert mit einem Anschlag, kombiniert diesen jedoch mit dem Gewindefreibereich. Der Gewindefreibereich zeichnet sich dadurch aus, dass der umfangseitig des Gewindebolzens vorgesehene und obligatorische Gewindegang in diesem Bereich unterbrochen bzw. entfernt ist. Dadurch kann der Gewindebolzen in dem Gewindefreibereich keine Kraft übertragen.

Im Detail verfügt die Spannmutter in ihrem Innern über wenigstens einen Gewindegang, in welchen der Gewindebolzen mit seinem Gewindegang eintaucht. Erreicht nun der Gewindebolzen mit seinem Gewindefreibereich den Gewindegang im Innern der Spannmutter, so kann der Gewindebolzen nicht weiter ausgedreht werden. Dazu ist die Auslegung typischerweise so getroffen, dass der Gewindefreibereich des Gewindebolzens eine axiale Länge aufweist, welche der Gewindelänge des den Gewindebolzen aufnehmenden Gewindeganges im Innern der Spannmutter im Wesentlichen entspricht. Als Folge hiervon dreht der Gewindebolzen durch, sobald sein Gewindefreibereich den Gewindegang im Innern der Spannmutter erreicht.

Zugleich sorgt bei diesem Vorgang der sich an den Gewindefreibereich in Richtung auf das Ende des Gewindebolzens anschließende Anschlag dafür, dass der Gewindebolzen nach wie vor im Innern der Spannmutter gehalten wird. In der Regel findet sich der Anschlag am in Ausdrehrichtung des Gewindebolzens hinteren Ende des Gewindebolzens bzw. in diesem Bereich. Der Gewindegang des Gewindebolzens endet demgegenüber vorher, geht nämlich in den Gewindefreibereich über, an welchen sich der fragliche Anschlag in axialer Richtung anschließt.

Jedenfalls wird durch diesen Kunstgriff und die Ausrüstung des Gewindebolzens mit dem Gewindefreibereich nicht nur eine wirksame Ausdrehsicherung zur Verfügung gestellt, sondern wird zugleich ein Bediener über das Erreichen des Anschlages bzw. Endanschlages informiert. Denn der Bediener registriert in dem Fall, dass der Gewindefreibereich des Gewindebolzens den Gewindegang im Innern der Spannmutter erreicht, dass der fragliche Gewindebolzen praktisch "durchdreht" und nicht weiter ausgedreht werden kann, sondern vielmehr gegen den Anschlag axial anläuft. Dadurch wird eine zugleich wirksame Ausdrehsicherung mit der zusätzlichen Möglichkeit geschaffen, den Bediener über das Erreichen des Anschlages bzw. Endanschlages zu informieren. Hierin sind die wesentlichen Vorteile zu sehen.

Nach vorteilhafter Ausgestaltung ist der Gewindefreibereich als in den Gewindegang des Gewindebolzens eingebrachter Freistich ausgebildet. Bei diesem Freistrich handelt es sich definitionsgemäß um eine Abtragung an dem rotationssymmetrischen Gewindegang in vorbestimmter Form und mit festgelegten Maßen. Tatsächlich kann der Freistich in den Gewindegang des Gewindebolzens beispielsweise derart eingebracht werden, dass der Gewindegang im Gewindefreibereich schlicht und ergreifend soweit abgedreht wird, dass der Gewindebolzen nicht (mehr) kraftübertragend in den Gewindegang im Innern der Spannmutter eingreift und eingreifen kann. Dadurch erklärt sich der zuvor bereits angesprochene Leerlauf bzw. das "Durchdrehen" des Gewindebolzens gegenüber der Spannmutter in dem Gewindefreibereich.

Bei dem Anschlag handelt es sich vorteilhaft um einen Ringanschlag. Außerdem ist die Auslegung erfindungsgemäß so getroffen, dass der Anschlag mit der Feder ausgerüstet ist. Die Feder kann dabei vorteilhaft aus einem Elastomer hergestellt werden. Dadurch ist die Feder besonders einfach und kostengünstig aufgebaut. Hier hat es sich bewährt, wenn die Feder als Federring ausgebildet ist. Im einfachsten Fall handelt es sich folglich bei dem Federring um einen Elastomerring, der einfach herzustellen ist und in großer Zahl sowie demzufolge preisgünstig zur Verfügung steht.

Außerdem ist erfindungsgemäß der Anschlag zweiteilig mit einem Festanschlag und einem Losanschlag ausgebildet ist. In der Regel ist der Anschlag ringförmig bzw. als Ringanschlag ausgebildet, wie dies zuvor bereits erläutert wurde. Dann handelt es sich bei dem Festanschlag um einen Festanschlagring und bei dem Losanschlag um einen Losanschlagring. Die Feder ist dabei erfindungsgemäß zwischen dem Festanschlag und dem Losanschlag bzw. zwischen dem Festanschlagring und dem Losanschlagring angeordnet. Hier ist die Auslegung meistens so getroffen, dass die Feder bzw. der Federring ebenso wie der Festanschlagring und der Losanschlagring konzentrisch zueinander angeordnet sind und über eine gemeinsame Achse als jeweils Kreismittelpunkt verfügen.

Der Festanschlagring ist im Allgemeinen mit dem Gewindebolzen verbunden, lässt sich folglich im Vergleich zum Gewindebolzen nicht axial verschieben. Demgegenüber ist der Losanschlagring axial verschiebbar an den Gewindebolzen angeschlossen. Hier hat es sich bewährt, wenn der Losanschlagring (und der Festanschlagring) in einer Ausnehmung des Gewindebolzens aufgenommen wird bzw. werden. Innerhalb dieser Ausnehmung kann der Losanschlagring eine Axialbewegung vollführen. Diese Axialbewegung des Losanschlagringes wird erfindungsgemäß ausdrücklich zugelassen, weil zwischen dem Losanschlagring und dem Festanschlagring der Federring aus dem Elastomer angeordnet ist und demzufolge Axialbewegungen des Losanschlagringes gegenüber dem Festanschlagring federnd aufnimmt.

Die beiden Anschlagringe sind in der Regel jeweils mit einem zugehörigen Sicherungsring ausgerüstet. Außerdem verfügen die beiden Anschlagringe meistens im Querschnitt über eine L-förmige Gestaltung. Dabei ist die Auslegung dann noch weiter so getroffen, dass die beiden kurzen L-Schenkel des jeweils im Querschnitt L-förmigen Anschlagringes den zugehörigen Sicherungsring übergreifen. Als Folge hiervon sind die beiden kurzen L-Schenkel der jeweiligen Anschlagringe entgegengesetzt zueinander gerichtet und definieren zwischen sich eine Aufnahmenut für den Federring aus dem Elastomer.

Im Ergebnis wird eine Spannvorrichtung zur Verfügung gestellt, die mit einer besonders wirksamen und insbesondere beschädigungsfreien Ausdrehsicherung ausgerüstet ist. Das lässt sich im Kern auf den endseitig des Gewindebolzens vorgesehenen Gewindefreibereich mit daran anschließendem Anschlag als Ausdrehsicherung zurückführen. Sobald der Gewindebolzen bei seinem Ausdrehvorgang den Gewindefreibereich erreicht, kommt es dazu, dass der Gewindebolzen gegenüber dem ihn aufnehmenden Gewindegang im Innern der Spannmutter "durchdreht". Der Anschlag stellt hierbei sicher, dass der Gewindebolzen nicht aus dem Gewindegang "herausfallen" kann.

Durch die an dieser Stelle vorteilhaft vorgesehene Auslegung des Anschlages mit der Feder aus dem Elastomer wird darüber hinaus erreicht, dass beim Ausdrehen des Gewindebolzens aus dem Gewindegang im Innern der Spannmutter jeweils der letzte Gewindegang des Gewindebolzens verlassen wird und eine weitere Drehbewegung zu einem "Klacken" führt, weil die dem Anschlag zugeordnete Feder den Gewindebolzen immer wieder - leicht - in den Gewindegang im Innern der Spannmutter hineindrückt. Diese Vorgehensweise hat den Vorteil, dass das Erreichen der Ausdrehsicherung nicht nur haptisch von einem Bediener erfasst wird, nämlich durch das zuvor bereits angesprochene "Durchdrehen" des Gewindebolzens gegenüber der Spannmutter. Sondern das wiederkehrende "Klackgeräusch" unterstützt diesen Vorgang zusätzlich noch akustisch.

Schließlich stellt diese spezielle Auslegung sicher, dass der Gewindebolzen beim Erreichen der Ausdrehsicherung unschwer wieder in den Gewindegang im Innern der Spannmutter in der Gegenrichtung hineingefädelt werden kann, weil der Gewindebolzen durch die in dieser Richtung wirkende (geringe) Federkraft in das Gewinde im Innern der Spannmutter gleichsam hineingezogen bzw. eingeführt wird. Dadurch sind etwaige Verkantungen des Gewindebolzens gegenüber dem Gewindegang im Innern der Spannmutter beim Wiedereindrehen des Gewindebolzens in die Spannmutter praktisch ausgeschlossen.

Im Ergebnis werden etwaige Beschädigungen des Gewindebolzens und der Ausdrehsicherung erfindungsgemäß einerseits ausgeschlossen und wird andererseits das Erreichen der Ausdrehsicherung sowohl haptisch als auch akustisch einem Bediener vermittelt. Das führt in Verbindung mit der zugleich durch die Feder am Anschlag realisierten Ausrichtung des Gewindebolzens im Vergleich zum Gewindegang im Innern der Spannmutter dazu, dass das anschließende Wiedereindrehen des Gewindebolzens in die Spannmutter problemlos gelingt. Das alles führt zu einem insgesamt beschädigungsfreien und folglich dauerhaften Betrieb mit langer Lebensdauer, der bisher im Stand der Technik ohne Vorbild geblieben ist.

Im Folgenden wird die Erfindung anhand einer lediglich ein Ausführungsbeispiel darstellenden Zeichnung näher erläutert; es zeigen:
- Fig. 1: die erfindungsgemäße Spannvorrichtung in einer Übersicht teilweise im Schnitt und
- Fig. 2: den Gewindebolzen mit der Ausdrehsicherung im Detail ebenfalls teilweise im Schnitt.

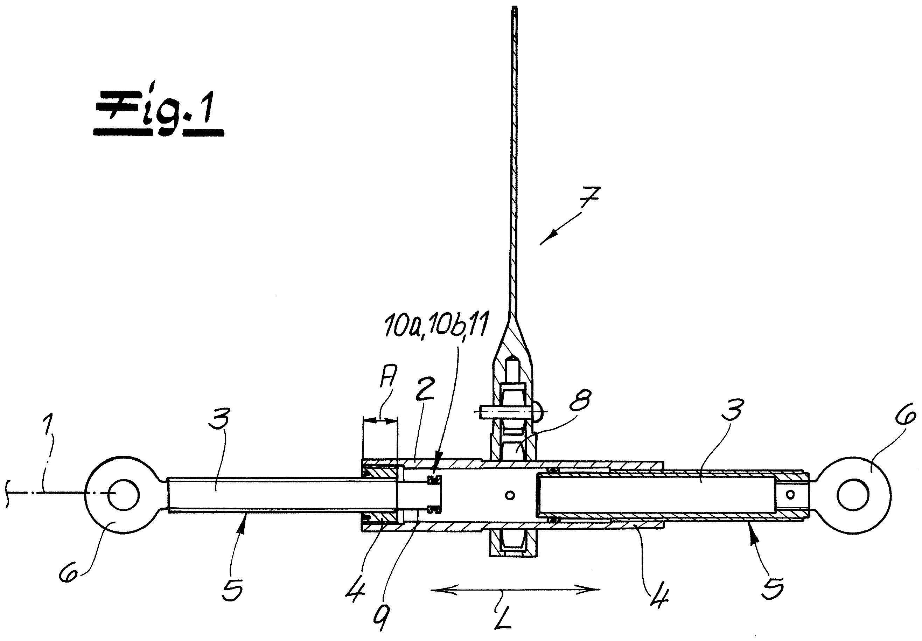

In den Figuren ist eine Spannvorrichtung dargestellt. Mit Hilfe der Spannvorrichtung können Ketten, Bänder, Seile oder vergleichbare Spannmittel 1 gespannt werden, die in der Fig. 1 lediglich angedeutet sind. Das jeweilige Spannmittel 1 kann dabei beidseitig an die Spannvorrichtung angeschlossen werden. Grundsätzlich kann das Spannmittel 1 aber auch nur einseitig mit der Spannvorrichtung verbunden werden. Dann wird die Spannvorrichtung beispielsweise mit ihrem anderen Ende an eine Ladefläche oder einen anderen Festpunkt angeschlossen. Das ist im Detail nicht dargestellt.

Die Spannvorrichtung verfügt in ihrem grundsätzlichen Aufbau zunächst einmal über wenigstens eine rohrförmige Spannmutter 2, die nach dem Ausführungsbeispiel als in Längsrichtung L bzw. Axialrichtung längserstreckte Spannhülse ausgebildet ist. In die Spannmutter 2 tauchen nach dem Ausführungsbeispiel beidseitig jeweils Gewindebolzen 3 ein. Der jeweilige Gewindebolzen 3 wechselwirkt mit der Spannmutter 2. Zu diesem Zweck verfügt die Spannmutter 2 jeweils endseitig über gegenläufige Gewindegänge 4, in welche der zugehörige Gewindebolzen 3 mit seinem außenumfangseitigen Gewindegang 5 eingreift. Grundsätzlich und bevorzugt kann die Spannmutter 2 aber auch mit nur einem (einzigen) Gewindebolzen 3 ausgerüstet werden.

Auf diese Weise führt eine Drehung der Spannmutter 2 in einer Drehrichtung dazu, dass die beiden Gewindebolzen 3 bzw. der eine (einzige) Gewindebolzen 3 jeweils gleichmäßig in die Spannmutter 2 ein- oder aus dieser wieder heraustauchen, und zwar in der Axialrichtung bzw. Längsrichtung L. Bei diesem Vorgang wird das jeweilige Spannmittel 1 entspannt bzw. gespannt. Dazu ist der betreffende Gewindebolzen 3 endseitig mit einer Öse 6 ausgerüstet, die mit dem Spannmittel 1 oder auch einem Festpunkt an der Ladefläche gekoppelt werden kann. Die zuvor bereits angesprochenen Drehbewegungen der Spannmutter 2 zum Spannen des Spannmittels 1 werden auf die Spannmutter 2 mit Hilfe einer Ratsche 7, 8 übertragen. Die Ratsche 7, 8 verfügt über einen Spannhebel 7 mit Spannklinke, die mit einem an die Spannmutter 2 angeschlossenen Zahnkranz 8 in bekannter Art und Weise wechselwirkt.

Jedenfalls kann mit Hilfe der Ratsche 7, 8 die Spannmutter 2 im Gegenuhrzeigersinn ebenso wie im Uhrzeigersinn beaufschlagt werden. Je nach Auslegung der Gewindegänge 4, 5 führt dies dazu, dass die beiden Gewindebolzen 3 in die Spannmutter 2 eintauchen oder wieder aus dieser auftauchen, und zwar in axialer Richtung bzw. in der Längsrichtung L. Als Folge hiervon wird das Spannmittel 1 bzw. werden die mehreren Spannmittel 1 gespannt oder entspannt.

Damit eine Ausdrehbewegung des im Ausführungsbeispiel linken Gewindebolzens 3 gegenüber dem Gewindegang 4 innenseitig der Spannmutter 2 nicht dazu führt, dass der Gewindebolzen 3 aus der Spannmutter 2 herausgedreht wird, ist der Gewindebolzen 3 mit einer endseitigen Ausdrehsicherung 9; 10a, 10b, 11 ausgerüstet. Zu diesem Zweck verfügt der Gewindebolzen 3 endseitig über einen Gewindefreibereich 9 und einen daran anschließenden Anschlag 10a, 10b, 11, die zusammengenommen als die Ausdrehsicherung 9; 10a, 10b, 11 ausgerüstet sind und fungieren.

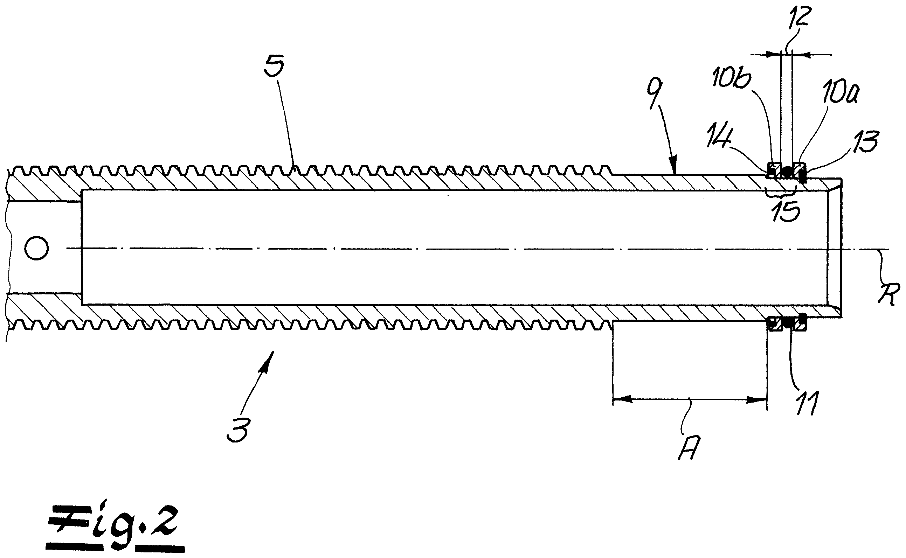

Der Gewindefreibereich 9 verfügt in diesem Zusammenhang über eine axiale Länge A, welche der Länge des Gewindeganges 4 bzw. der Gewindelänge des den betreffenden Gewindebolzen 3 aufnehmenden Gewindeganges 4 im Innern der Spannmutter 2 im Wesentlichen entspricht. Das wird bei einem Vergleich der Fig. 1 und 2 deutlich.

Bei dem Gewindefreibereich 9 handelt es sich um einen in den Gewindegang 5 des betreffenden Gewindebolzens 3 eingebrachten Freistich, also eine Abtragung des Gewindeganges 5 in diesem Bereich. Das kann beispielsweise durch entsprechendes Abdrehen des Gewindeganges 5 im Gewindefreibereich 9 erfolgen und vorgenommen werden.

Der Anschlag 10a, 10b, 11 ist insgesamt als Ringanschlag ausgeführt. Tatsächlich verfügt der Anschlag 10a, 10b, 11 über eine ringartige Gestalt, und zwar in Bezug auf eine mit dem Gewindebolzen 3 gemeinsame Rotationsachse R. Außerdem ist der Anschlag 10a, 10b, 11 mit einer Feder 11 ausgerüstet, die aus einem Elastomer hergestellt ist. Tatsächlich handelt es sich bei der Feder 11 um einen Federring aus einem elastomeren Kunststoff.

Darüber hinaus ist der Anschlag 10a, 10b, 11 abgesehen von der Feder 11 zweiteilig mit einem Festanschlag 10a und einem Losanschlag 10b ausgelegt. Weil der Anschlag 10a, 10b, 11 insgesamt als Ringanschlag ausgebildet ist, handelt es sich bei dem Festanschlag 10a um einen Festanschlagring 10a und bei dem Losanschlag 10b um einen Losanschlagring 10b. Die Feder 11 ist dabei zwischen dem Festanschlagring 10a und dem Losanschlagring 10b angeordnet. Dazu wird die Feder 11 in einer Ausnehmung bzw. einer Aufnahmenut 12 zwischen den beiden Anschlagringen 10a, 10b aufgenommen.

Anhand der Detaildarstellung in der Fig. 2 erkennt man, dass der Festanschlagring 10a mit dem Gewindebolzen 3 verbunden ist. Demgegenüber kann der Losanschlagring 10b eine Axialbewegung entlang der Längsrichtung L vollführen. Zu diesem Zweck wird der Losanschlagring 10b axial verschiebbar an dem Gewindebolzen 3 geführt. Dazu wird der Losanschlagring 10b in einer Ausnehmung 15 des Gewindebolzens 3 aufgenommen. Gleiches gilt für den Festanschlagring 10a.

Beiden Anschlagringen 10a, 10b ist jeweils ein Sicherungsring 13, 14 zugeordnet. Der Sicherungsring 13 gehört dabei zum Festanschlagring 10a, wohingegen der Sicherungsring 14 mit dem Losanschlagring 10b wechselwirkt. Außerdem sind beide Anschlagringe 10a, 10b im Querschnitt L-förmig ausgelegt.

Tatsächlich verfügen beide Anschlagringe 10a, 10b über jeweils einen kurzen L-Schenkel, welcher jeweils den zugehörigen Sicherungsring 13, 14 übergreift. Da beide Anschlagringe 10a, 10b darüber hinaus im Wesentlichen den gleichen Außendurchmesser aufweisen, wird zwischen den beiden Anschlagringen 10a, 10b die zuvor bereits angesprochene Aufnahmenut 12 gebildet, in welche die Feder 11 bzw. der Federring 11 aus dem elastomeren Kunststoff eingreift.

Der dem Festanschlagring 10a zugeordnete Sicherungsring 13 greift in eine Nut außenumfangseitig des Gewindebolzens 3 ein und ist dadurch axial gesichert.

Gleiches gilt für den Festanschlagring 10a. Demgegenüber ist der dem Losanschlagring 10b zugeordnete Sicherungsring 14 axial verschiebbar in der Ausnehmung 15 des Gewindebolzens 3 angeordnet.

Sobald also der Gewindebolzen 3 bis zur auf diese Weise realisierten Ausdrehsicherung 9; 10a, 10b, 11 aus der Spannmutter 2 herausgedreht ist, fährt der Losanschlagring 10b innenseitig gegen den Gewindegang 4 im Innern der Spannmutter 2. Zugleich taucht der Gewindefreibereich 9 komplett in den Gewindegang 4 ein, weil dessen axiale Länge der axialen Länge A des Gewindefreibereiches 9 entspricht.

Eine zunehmende Ausdrehbewegung an dem Gewindebolzen 3 hat nun zur Folge, dass die Feder 11 zwischen den beiden Anschlagringen 10a, 10b komprimiert wird, weil der Losanschlagring 10b an dem Anschlag im Innern der Spannmutter 2 anliegt und durch seine axial bewegliche Lagerung zusammen mit dem Sicherungsring 14 innerhalb der Ausnehmung 15 gegen die Feder 11 fahren kann und diese (geringfügig) komprimiert.

Dadurch kommt es auf der gegenüberliegenden Seite des Gewindeganges 4 im Innern der Spannmutter 2 dazu, dass das Ende des Gewindeganges 5 des Gewindebolzens 3 den Gewindegang 4 verlässt, danach aber durch die sich geringfügig entspannende Feder 11 erneut in den Gewindegang 4 hineingezogen wird. Als Folge hiervon kommt es nicht nur dazu, dass der Gewindebolzen 3 in diesem Bereich "durchdreht", sondern zugleich auch ein "Klackgeräusch" beobachtet wird, nämlich jedes Mal dann, wenn das Ende des Gewindeganges 5 aus dem Gewindegang 4 im Innern der Spannmutter 2 auftaucht und durch die sich entspannende Feder erneut gegen den Gewindegang 4 angelegt wird. Zugleich sorgt die von der Feder 11 aufgebrachte Federkraft dafür, dass in der Gegenrichtung zur Ausdrehbewegung des Gewindebolzens 3 der Gewindegang 5 des Gewindebolzens 3 einwandfrei - wieder - in den Gewindegang 4 eingeführt wird und folglich Verkantungen zwischen dem Gewindebolzen 3 und der Spannmutter 2 ausdrücklich nicht beobachtet werden.

## Patentansprüche

1. Spannvorrichtung zum Spannen von Ketten, Bändern, Seilen oder dergleichen Spannmittel (1), mit wenigstens einer rohrförmigen Spannmutter (2), und mit zumindest einem in die Spannmutter (2) eintauchenden und mit ihr wechselwirkenden Gewindebolzen (3), wobei
der Gewindebolzen (3) mit wenigstens einer endseitigen Ausdrehsicherung (9; 10a, 10b, 11) ausgerüstet ist, und wobei
der Gewindebolzen (3) endseitig mit einem Gewindefreibereich (9) und einem daran anschließenden Anschlag (10a, 10b, 11) als Ausdrehsicherung (9, 10a, 10b, 11) ausgerüstet ist,
**dadurch gekennzeichnet, dass**
der Anschlag (10a, 10b, 11) zweiteilig mit einem Festanschlag (10a) und einem Losanschlag (10b) sowie dazwischen angeordneter Feder (11) ausgebildet ist.

2. Spannvorrichtung nach Anspruch 1, **dadurch gekennzeichnet, dass** der Gewindefreibereich (9) eine axiale Länge (A) aufweist, welche der Gewindelänge eines den Gewindebolzen (3) aufnehmenden Gewindeganges (4) im Innern der Spannmutter (2) im Wesentlichen entspricht.

3. Spannvorrichtung nach Anspruch 1 oder 2, **dadurch gekennzeichnet, dass** der Gewindefreibereich (9) als in einen Gewindegang (5) des Gewindebolzens (3) eingebrachter Freistich ausgebildet ist.

4. Spannvorrichtung nach einem der Ansprüche 1 bis 3, **dadurch gekennzeichnet, dass** der Anschlag (10a, 10b, 11) als Ringanschlag ausgebildet ist.

5. Spannvorrichtung nach einem der Ansprüche 1 bis 4, **dadurch gekennzeichnet, dass** die Feder (11) aus einem Elastomer hergestellt ist.

6. Spannvorrichtung nach Anspruch 4 oder 5, **dadurch gekennzeichnet, dass** die Feder (11) als Federring (11) ausgebildet ist.

7. Spannvorrichtung nach einem der Ansprüche 1 bis 6, **dadurch gekennzeichnet, dass** der Festanschlag (10a) als Festanschlagring (10a) und der Losanschlag (10b) als Losanschlagring (10b) ausgebildet sind.

8. Spannvorrichtung nach Anspruch 7 , **dadurch gekennzeichnet, dass** der Festanschlagring (10a) mit dem Gewindebolzen (3) verbunden ist.

9. Spannvorrichtung nach Anspruch 7 oder 8, **dadurch gekennzeichnet, dass** der Losanschlagring (10b) axial verschiebbar an dem Gewindebolzen (3) gelagert ist.

10. Spannvorrichtung nach einem der Ansprüche 7 bis 9, **dadurch gekennzeichnet, dass** beide Anschlagringe (10a, 10b) in einer Ausnehmung (15) des Gewindebolzens (3) aufgenommen werden.

11. Spannvorrichtung nach einem der Ansprüche 7 bis 10, **dadurch gekennzeichnet, dass** beide Anschlagringe (10a, 10b) mit jeweils einem Sicherungsring (13,14) ausgerüstet sind.

12. Spannvorrichtung nach einem der Ansprüche 7 bis 11, **dadurch gekennzeichnet, dass** beide Anschlagringe (10a, 10b) im Querschnitt L-förmig ausgebildet sind.

## Claims

1. A tensioning device for tensioning changes, belts, cables or similar clamping means (1), with at least one tubular clamping nut (2) and with a least one threaded bolt (3) entering into the clamping nut (2) and interacting with it, wherein
the threaded bolt (3) is provided with at least one end-side unscrewing protection device (9; 10a, 10b, 11), and wherein
at its end the threaded bolt (3) is provided with a thread-free section (9) and an adjoining stop (10a, 10b, 11) as the unscrewing protection device (9, 10a, 10b, 11)
**characterised in that**
the stop (10a, 10b, 11) is designed in two parts with a fixed stop (10a) and loose stop (10b) as well as a spring (11) arranged between them.

2. The tensioning device according to claim 1, **characterised in that** the thread-free area (9) has an axial length (A) that essentially corresponds to the thread length of the thread (4) taking up the threaded bolt (3) in the interior of the clamping nut (2).

3. The tensioning device according to claim 1 or 2, **characterised in that** the thread-free are (9) is designed as an undercut introduced into a thread (5) of the threaded bolt (3).

4. The tensioning device according to any one of claims 1 to 3, **characterised in** the stop (10a, 10b, 11) is designed a ring stop.

5. The tensioning device according to any one of claims 1 to 4, **characterised in that** the spring (11) is made of an elastomer.

6. The tensioning device according to claim 4 or 5, **characterised in that** the spring (11) is designed as a spring ring (11).

7. The tensioning device according to any one of claims 1 to 6, **characterised in that** the fixed stop (10a) is designed a fixed stop ring (10a) and the loose stop (10b) as a loose stop ring (10b).

8. The tensioning device according to claim 7, **characterised in that** the fixed ring stop (10a) is connected to the threaded bolt (3).

9. The tensioning device according to claim 7 or 8, **characterised in that** the loose stop (10b) is connected to the threaded bolt (3).

10. The tensioning device according to any one of claims 7 to 9, **characterised in that** both stop rings (10a, 10b) are taken up in a recess (15) of the threaded bolt (3).

11. The tensioning device according to any one of claims 7 to 10, **characterised in that** both stop rings (10a, 10b) are provided with a securing ring (13, 14).

12. The tensioning device according to any one of claims 7 to 11, **characterised in that** both stop rings (10a, 10b) are designed to be L-shaped in cross-section.

## Revendications

1. Dispositif tendeur, destiné à tendre des chaînes, des bandes, des câbles ou des moyens tendeurs (1) similaires, pourvu d'au moins un écrou tendeur (2) de forme tubulaire et d'au moins un boulon fileté (3) plongeant dans l'écrou tendeur (2) et interagissant avec celui-ci,
le boulon fileté (3) étant équipé d'au moins une sécurité anti-dévissage (9 ; 10a, 10b, 11) du côté extrémité et
le boulon fileté (3) étant équipé du côté extrémité d'une zone libre de taraudage (9) et d'une butée (10a, 10b, 11) se raccordant sur celle-ci, en tant que sécurité anti-dévissage (9, 10a, 10b, 11),
**caractérisé en ce que**
la butée (10a, 10b, 11) est conçue en deux parties, avec une butée fixe (10a) et une butée mobile (10b), ainsi qu'avec un ressort (11) placé entre celles-ci.

2. Dispositif tendeur selon la revendication 1, **caractérisé en ce que** la zone libre de taraudage (9) présente une longueur (A) axiale, laquelle correspond sensiblement à la longueur de filetage du filet (4) réceptionnant le boulon fileté (3) à l'intérieur de l'écrou tendeur (2).

3. Dispositif tendeur selon la revendication 1 ou 2, **caractérisé en ce que** la zone libre de taraudage (9) est conçue sous la forme d'un dégagement ménagé dans le filet (5) du boulon fileté (3).

4. Dispositif tendeur selon l'une quelconque des revendications 1 à 3, **caractérisé en ce que** la butée (10a, 10b, 11) est conçue sous la forme d'une butée annulaire.

5. Dispositif tendeur selon l'une quelconque des revendications 1 à 4, **caractérisé en ce que** le ressort (11) est fabriqué en un élastomère.

6. Dispositif tendeur selon la revendication 4 ou 5, **caractérisé en ce que** le ressort (11) est conçu sous la forme d'une bague élastique (11).

7. Dispositif tendeur selon l'une quelconque des revendications 1 à 6, **caractérisé en ce que** la butée fixe (10a) est conçue sous la forme d'une bague de butée fixe (10a) et la butée mobile (10b) est conçue sous la forme d'une bague de butée mobile (10b).

8. Dispositif tendeur selon la revendication 7, **caractérisé en ce que** la bague de butée fixe (10a) est assemblée avec le boulon fileté (3).

9. Dispositif tendeur selon la revendication 7 ou 8, **caractérisé en ce que** la bague de butée mobile (10b) est logée de manière déplaçable en direction axiale sur le boulon fileté (3).

10. Dispositif tendeur selon l'une quelconque des revendications 7 à 9, **caractérisé en ce que** les deux bagues de butée (10a, 10b) sont réceptionnées dans un évidement (15) du boulon fileté (3).

11. Dispositif tendeur selon l'une quelconque des revendications 7 à 10, **caractérisé en ce que** les deux bagues de butée (10a, 10b) sont équipées chacune d'une bague de blocage (13, 14).

12. Dispositif tendeur selon l'une quelconque des revendications 7 à 11, **caractérisé en ce que** les deux bagues de butée (10a, 10b) sont conçues en forme de L dans leur section transversale.
